# EUROPEAN PATENT APPLICATION

(11) **EP 2 653 963 A2**
(43) Date of publication of application: **23.10.2013**
(21) Application number: 13156726.5
(22) Date of filing: 26.02.2013
(51) Int. Cl.: G06F 3/14

(54) **Image communication apparatus, image communication server and image processing method for image communication**

(30) Priority: 19.04.2012 KR 20120040794
(71) Applicant: Samsung Electronics Co., Ltd, Gyeonggi-do 443-742 (KR)
(72) Inventor: Chung, Ji-hye, Seoul (KR); Cho, Dae-woo, Gyeonggi-do (KR); Ahn, Jae-hong, Gyeonggi-do (KR); Choi, Sung-wook, Seoul (KR)
(74) Representative: Brandon, Paul Laurence

(57) **Abstract**

An image processing method includes: acquiring a first image from a first image communication apparatus and acquiring a second image from a second image communication apparatus; generating a third image to be transmitted to an image receiving apparatus to which a transmission of an image has been requested by the first image communication apparatus, by synthesizing the first and second images; and encoding and transmitting the third image to the image receiving apparatus.

## Description

### BACKGROUND

### Field

Apparatuses and methods consistent with exemplary embodiments relate to an image communication apparatus, an image communication server and an image processing method for image communication.

### Description of the Related Art

An image communication apparatus such as a digital television (DTV) may transmit image data together with audio data, while performing an image communication function. That is, a camera module attached to the DTV takes a photograph of a user, and the photographed image data, together with audio data, may be transmitted to another device through the Internet or a mobile telecommunication network.

A related art image communication apparatus takes a photograph of a user through a single camera module which allows photography within a limited photographing area. If a camera is installed in a display apparatus, such as a DTV, it is not easy to carry and/or move the display apparatus itself, unlike in a case of a smaller mobile terminal. Thus, the photographing scope of the camera module is sufficiently fixed to the limited area and a private place of users may be exposed if the photographing area is expanded. Also, all of the users should be present in the photographing area of the camera to generate photographs of the users, which may cause an inconvenience.

### SUMMARY

Exemplary embodiments may address at least the above problems and/or disadvantages and other disadvantages not described above. Also, exemplary embodiments are not required to overcome the disadvantages described above, and an exemplary embodiment may not overcome any of the problems described above.

One or more exemplary embodiments provide a system which allows an image communication among a plurality of users by a plurality of image communication apparatuses having a limited photographing area such as a display apparatus, by taking a photograph of each user or a group of respective users and generating a multiview by the image communication apparatuses.

According to an aspect of an exemplary embodiment, there is provided an image communication apparatus which performs image communication with an image receiving apparatus, the image communication apparatus including: an image acquirer which takes a photograph of an object and acquires a first image; a communication unit which receives a second image photographed by a connected slave apparatus; a transmission image generator which generates a third image to be transmitted; and a controller which controls the transmission image generator to generate the third image by synthesizing the first and second images, and encodes and transmits the third image through the communication unit.

The transmission image generator may generate the third image to display the first image and the second image in an area of a single screen.

The transmission image generator may generate the third image to selectively display the first and second images according to a predetermined event.

The apparatus may further include a display unit which displays an image thereon; and an output image generator which generates a fourth image to be output through the display unit.

The controller may detect an external device which is communicable with the image communication apparatus in a wired/wireless manner, and receive the second image from the detected external device if the external device has an image communication function.

The apparatus may further include an audio acquirer which acquires a first audio, wherein the communication unit may further receive a second audio from the slave apparatus, and the controller may selectively transmit either the first audio or the second audio according to a user's election.

According to an aspect of another exemplary embodiment, there is provided an image communication server including: a communication unit which receives a first image and sync information from a first image communication apparatus, and receives a second image from a second image communication apparatus; a transmission image generator which generates a third image to be transmitted to an image receiving apparatus to which a transmission of an image has been requested by the first image communication apparatus; and a controller which controls the transmission image generator to generate the third image by synthesizing the first and second images based on the sync information, and encodes the third image and transmits the third image to the image receiving apparatus through the communication unit.

The transmission image generator may generate the third image to display the first and second images in an area of a single screen.

The transmission image generator may generate the third image to selectively display the first image and the second image according to a predetermined event.

The communication unit may receive a first audio from the first image communication apparatus and receive a second audio from the second image communication apparatus, and the controller may selectively transmit either the first audio or the second audio to the image receiving apparatus according to a selection of the first image communication apparatus.

The controller may determine whether to generate the third image according to a connection ID of the first and second image communication apparatuses.

The server may further include a controller which stores therein the generated third image.

According to an aspect of another exemplary embodiment, there is provided an image communication system which includes a first image communication apparatus, a second image communication apparatus and an image communication server, the image communication system including: the image communication server encoding a third image which is generated by synthesizing a first image acquired by the first image communication apparatus and a second image acquired by the second image communication apparatus, and transmitting the third image as an image stream to an image receiving apparatus to which a transmission of an image has been requested by the first image communication apparatus.

According to an aspect of another exemplary embodiment, there is provided an image processing method for image communication, the method including: acquiring a first image from a first image communication apparatus and acquiring a second image from a second image communication apparatus; generating a third image to be transmitted to an image receiving apparatus to which a transmission of an image has been requested by the first image communication apparatus, by synthesizing the first and second images; and encoding and transmitting the third image to the image receiving apparatus.

The method may further include receiving the second image from the first image communication apparatus, wherein the generating the third image may include generating the third image by the first image communication apparatus.

The method may further include transmitting the first image and sync information from the first image communication apparatus and the second image from the second image communication apparatus to an image communication server, wherein the generating the third image may include generating the third image by the image communication server based on the sync information.

The generating the third image may include generating the third image to display the first and second images in an area of a single screen.

The generating the third image may include generating the third image to selectively display the first and second images according to a predetermined event.

The first image communication apparatus may include a display unit to display an image thereon, and the method may further include generating a fourth image to be output through the display unit.

The method may further include acquiring a first audio from the first image communication apparatus and acquiring a second audio from the second image communication apparatus; and selectively transmitting either the first audio or the second audio to the image receiving apparatus according to a selection of the first image communication apparatus.

The method may further include determining whether to generate the third image according to a connection ID of the first and second image communication apparatuses.

The method may further include storing the third image in the image communication server.

### BRIEF DESCRIPTION OF THE DRAWINGS

The above and/or other aspects will become more apparent by describing certain exemplary embodiments, with reference to the accompanying drawings, in which:
FIG. 1 illustrates an image communication system according to an exemplary embodiment;
FIG. 2 is a control block diagram of an image communication apparatus according to an exemplary embodiment;
FIG. 3 is a control block diagram of an image communication server according to an exemplary embodiment;
FIG. 4 is a flowchart of an image processing method for image communication according to an exemplary embodiment;
FIG. 5 is a flowchart of the image processing method for image communication according to an exemplary embodiment; and
FIG. 6 is a flowchart of the image processing method for image communication according to an exemplary embodiment.

### DETAILED DESCRIPTION OF EXEMPLARY EMBODIMENTS

Certain exemplary embodiments are described in greater detail below with reference to the accompanying drawings

In the following description, like drawing reference numerals are used for the like elements, even in different drawings. The matters defined in the description, such as detailed construction and elements, are provided to assist in a comprehensive understanding of exemplary embodiments. However, exemplary embodiments can be carried out without those specifically defined matters. Also, well-known functions or constructions are not described in detail since that would obscure the invention with unnecessary detail.

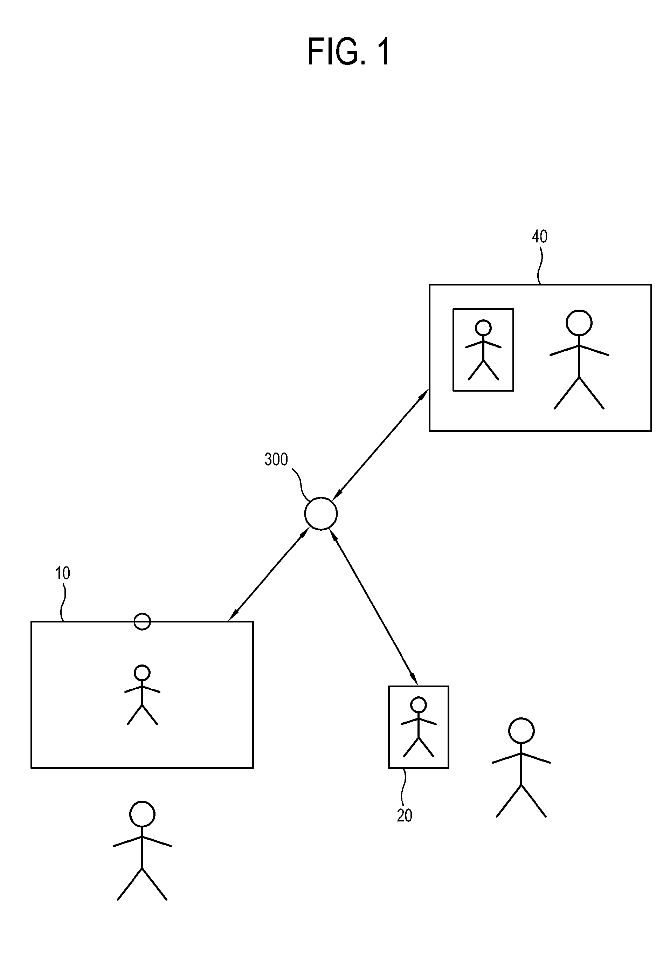

FIG. 1 illustrates an image communication system according to an exemplary embodiment.

The image communication system includes a plurality of image communication apparatuses 10, 20, and 40 and an image communication server 300. Each of the image communication apparatuses 10, 20, and 40 takes a photograph of its respective user or a group of users to generate image data and obtains user's audio to generate audio data.

In an exemplary embodiment, an image which is generated by two image communication apparatuses 10 and 20 of the plurality of image communication apparatuses 10, 20 and 40 is transmitted as an image stream to the remaining image communication apparatus 40, but not limited thereto. In the following description, the apparatuses which generate and transmit an image may be called the image communication apparatus and a slave apparatus, and may correspond to the image communication apparatus 10 and the image communication apparatus 20, respectively. The apparatus which receives the image may be called the image receiving apparatus and may correspond to the image communication apparatus 40. For purposes of convenience, the description of the image communication system is provided based on three image communication apparatuses, but the image communication system may include a different number of the image communication apparatuses, such as four, five, etc.

The first image communication apparatus 100 may be a display apparatus such as a DTV. The second image communication apparatus 200 may be a terminal such as a mobile phone or a personal digital assistant (PDA) which has a mobile communication function, but not limited thereto.

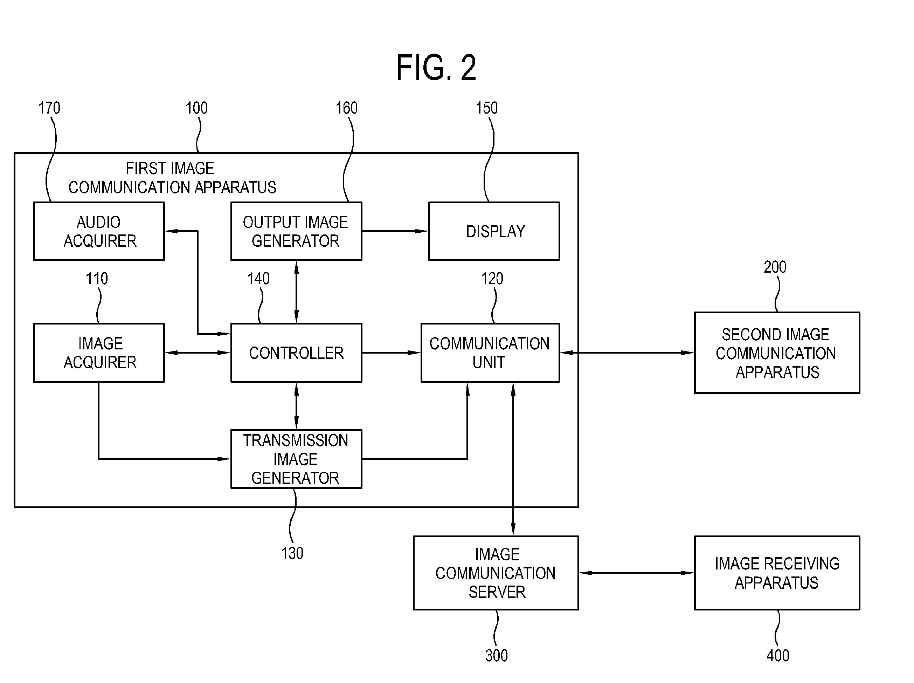

FIG. 2 is a control block diagram of the image communication apparatus 100 according to an exemplary embodiment.

According to the current exemplary embodiment, a first image communication apparatus 100 may act as a main image communication apparatus and may include an image acquirer 110, a communication unit 120, a transmission image generator 130, and a controller 140, and may further include a display 150, an output image generator 160 and an audio acquirer 170. The first image communication apparatus 100 may include a display apparatus which processes and displays an image signal that is supplied by an external image supply source such as a DTV.

The image acquirer 110 takes a photograph of an object to acquire a first image. The image acquirer 110 may include a camera module, and may be provided in a front surface of the first image communication apparatus 100 and take a photograph of a user to generate image data. If the first image communication apparatus 100 includes a display apparatus, such as a television, it is not easily carried or rotated, and therefore, the image acquirer 110 may take a photograph within a limited scope.

The communication unit 120 receives a second image which is photographed by a second image communication apparatus 200 which may act as a slave apparatus. The communication unit 120 includes a communication module to perform a data communication with an external device, and may communicate with the image communication server 300 and the image receiving apparatus 400 as well as receive a second image and a second audio from the second image communication apparatus 200. The second image communication apparatus 200 includes a camera module, and may be a terminal having an image communication function.

The transmission image generator 130 generates a third image which is transmitted to an external device, according to a control of the controller 140 which is described in detail below. The third image is generated on the basis of the first and second images, and may vary in format. For example, the third image may be generated by displaying the first and second images simultaneously, e.g., in a picture in picture (PIP), or may be displayed side by side or as upper and lower parts in an area of a screen. According to another exemplary embodiment, the third image may be generated by selectively displaying the first and second images according to a predetermined event. For example, if a user of the image receiving apparatus 400 inputs a predetermined key to display either the first image or the second image, the image receiving apparatus 400 may transmit such information to the first image communication apparatus 100, and the first image communication apparatus 100 may generate a third image to display only one image selected by a user based on the received information.

The controller 140 may include a microprocessor which controls the image communication function of the first image communication apparatus 100. The controller 140 controls the transmission image generator 130 to generate the third image by synthesizing the first image acquired by the image acquirer 110 and the second image transmitted by the second image communication apparatus 200 through the communication unit 120. The second image which is encoded by the second image communication apparatus 200 and transmitted as an image stream to the first image communication apparatus 100 is decoded to be synthesized with the first image.

If the third image is generated by the transmission image generator 130, the controller 140 encodes and transmits the third image through the communication unit 120. The third image which is generated by the transmission image generator 130 may be directly transmitted to the image receiving apparatus 400 through the communication unit 120 or transmitted to the image receiving apparatus 400 through a server. As the third image is transmitted as an image stream, the image receiving apparatus 400 may decode and display the received third image without a need for additional hardware and/or software to synthesize the first and second images. This is advantageous in data transmission compared to receiving the first and second images, separately.

The first image communication apparatus 100 may be a display apparatus, and may include a display 150 to display an image. The first image communication apparatus 100 may further include an output image generator 160 to generate a fourth image which is output on the display 150. The fourth image may include either the first image or the second image, or include an image which is generated by synthesizing the first and second images in a PIP format. The fourth image may be provided to a user of the first image communication apparatus 100, and may be the same as or different from the third image transmitted to the image receiving apparatus 400. The display 150 may include a liquid crystal display (LCD), a plasma display panel (PDP), an organic light-emitting diode (OLED), etc., and may display an image based on an image signal supplied by an external device or may display an image based on stored image data.

The controller 140 detects an external device which may communicate with the first image communication apparatus 100 in a wired or wireless manner, and identifies whether the external device has an image communication function and shares data for image communication. That is, regarding the image communication between the first image communication apparatus 100 and the image receiving apparatus 400, the external device having the image communication function may correspond to the second image communication apparatus 200 to receive the second image. If the connection to the second image communication apparatus 200 is ended during the image communication, the image communication apparatus 100 transmits only the first image to the image receiving apparatus 400.

The image communication function which is performed according to an exemplary embodiment includes transmission of the audio data. The first image communication apparatus 100 may further include an audio acquirer 170 to acquire the first audio, and the audio acquirer 170 may include a microphone to acquire a user's audio. The second image communication apparatus 200 may acquire a second audio, and the communication unit 120 may further receive the second audio from the second image communication apparatus 200. The controller 140 may selectively transmit one of the first audio and the second audio to either the image communication server 300 or the image receiving apparatus 400 according to a user's selection. The audio may be transmitted together with the third image.

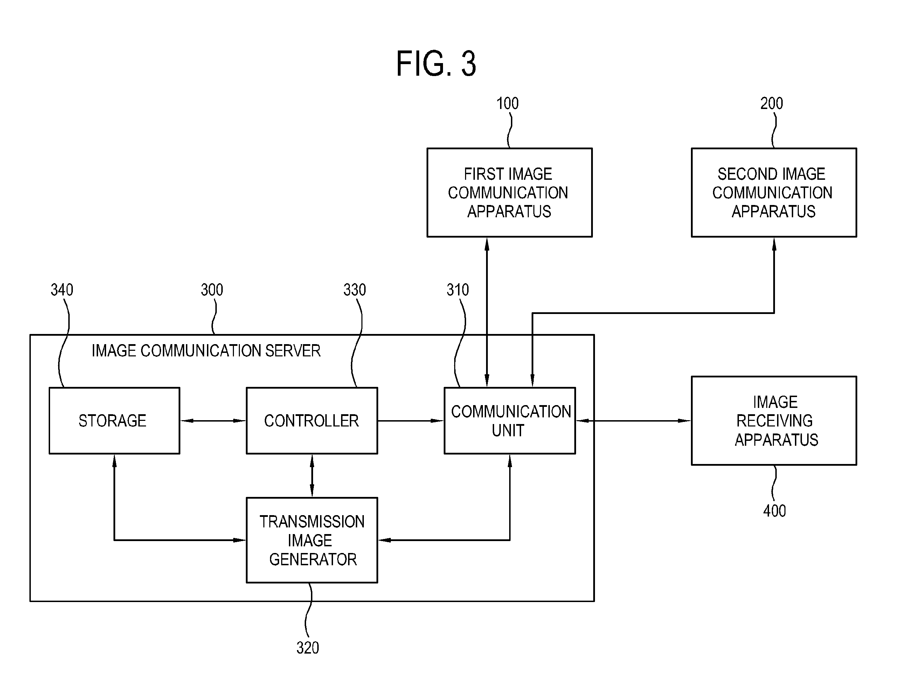

FIG. 3 is a control block diagram of the image communication server 300 according to an exemplary embodiment.

Most of elements of the first and second image communication apparatuses of FIG. 3 are similar to those of FIG. 2. Detailed elements of the image communication server 300 which are described below may be similar to those of the image communication server 300 of FIG. 2. The image communication server 300 may be included in the first image communication apparatus 100, or provided separately and may transmit and receive data to and from the first and second image communication apparatuses 100 and 200 in a wired and/or wireless manner.

According to the current exemplary embodiment, the image communication server 300 includes a communication unit 310, a transmission image generator 320, and a controller 330, and may further include a storage 340. The image communication server 300 may transmit and receive data to and from the first image communication apparatus 100, the second image communication apparatus 200 and the image receiving apparatus 400 through a network.

The communication unit 310 receives the first image and sync information from the first image communication apparatus 100, and receives the second image from the second image communication apparatus 200. The first image is an image generated by taking a photograph of a user of the first image communication apparatus 100, and the second image is an image generated by taking a photograph of a user of the second image communication apparatus 200. The sync information includes information for synchronizing the first image and the second image.

The transmission image generator 320 generates a third image to be transmitted to the image receiving apparatus 400 to which transmission of an image has been requested by the first image communication apparatus 100, according to a control of the controller 330 which is described in detail below. The third image may be generated by displaying the first and second images in an area of a screen or by selectively displaying the first and second images according to a predetermined event, as described above with reference to FIG. 2.

The controller 330 controls the image communication function of the image communication server 300 according to the current exemplary embodiment. The controller 330 controls the transmission image generator 320 to generate the third image by synthesizing the first and second images based on the sync information transmitted by the first image communication apparatus 100.

If the third image is generated by the transmission image generator 320, the controller 330 encodes and transmits the third image to the image receiving apparatus 400 through the communication unit 310. As the third image is transmitted as an image stream, the image receiving apparatus 400 may decode and display the received third image without additional hardware and/or software for synthesizing the first and second images. This is advantageous in data transmission compared to receiving the first and second images, separately.

The image communication function according to the current exemplary embodiment may include transmission of audio data. The communication unit 310 receives a first audio from the first image communication apparatus 100, and receives a second audio from the second image communication apparatus 200. The controller 330 may selectively transmit either the first audio or the second audio to the image receiving apparatus 400 according to a selection of the first image communication apparatus 100. The audio data may be transmitted together with the third image.

The controller 330 of the image communication server 300 may determine whether to generate the third image depending on a connection identifier (ID) of the first and second image communication apparatuses 100 and 200. The ID may be set as a password, a serial number of the device, etc. That is, if the first and second image communication apparatuses 100 and 200 are connected through the same ID or a predetermined family ID, they as a group may generate and transmit the third image to the image receiving apparatus 400.

The image communication server 300 may further include a storage 340 to store the generated third image. If the image receiving apparatus 400 to which transmission of an image has been requested is not connected to the image communication server 300, the third image is stored as an image message in the storage 340, and may be transmitted to the image receiving apparatus 400 upon connection of the image communication server 300. As the image communication server 300 may determine whether to transmit image and audio data based on an ID of each device, a user of the image receiving apparatus 400 may identify the third image stored in the storage 340 upon connection through the same ID or different applicable ID even in case when a user uses another image receiving apparatus.

According to the described above exemplary embodiments, an image communication system may generate and transmit an image as a multiview from images photographed by a plurality of devices such as the camera of the first image processing apparatus 100 and the camera of the second image processing apparatus 200.

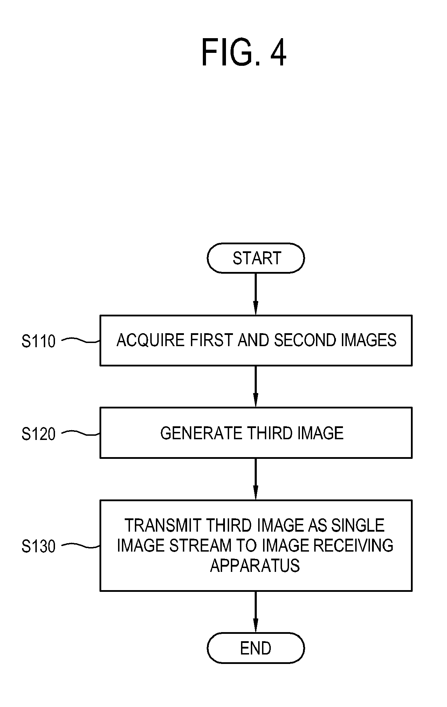

FIG. 4 is a flowchart of an image processing method for image communication according to an exemplary embodiment.

The first image communication apparatus 100 takes a photograph of a first user and acquires the first image, and the second image communication apparatus 200 takes a photograph of a second user and acquires the second image, in operation S110. The acquired first and second images are transmitted to the first image communication apparatus 100 or the image communication server 300, and the third image synthesizing the first and second images is generated, in operation S120. The generated third image is transmitted as a single image stream to the image receiving apparatus 400, in operation S130.

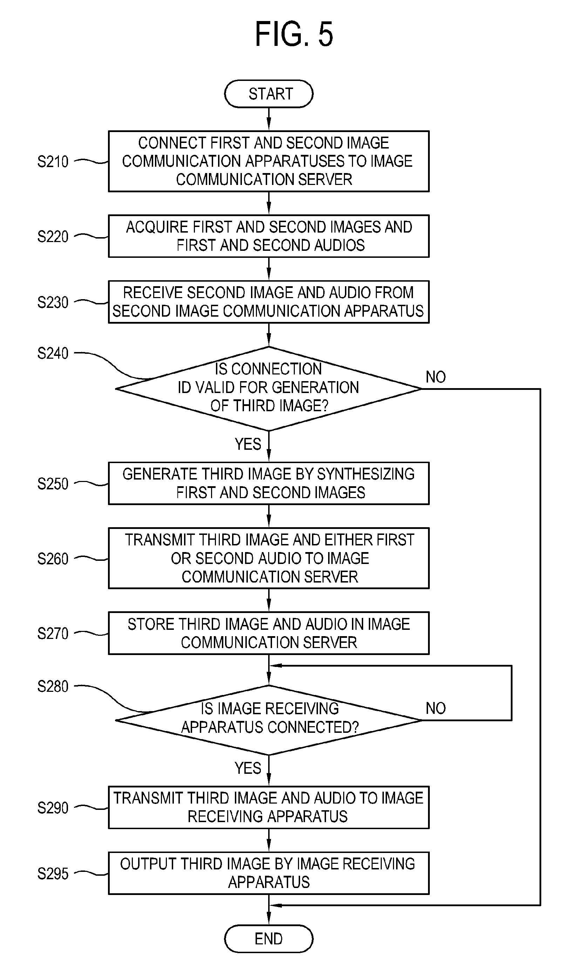

FIG. 5 is a flowchart of the image processing method for image communication according to an exemplary embodiment. The current exemplary embodiment will be described in detail with reference to FIG. 5.

According to an exemplary embodiment, the first and second image communication apparatuses 100 and 200 which acquire and transmit an image, the image receiving apparatus which receives an image, and the image communication server 300 may be provided. The first image communication apparatus 100 may be a display apparatus such as a DTV including a camera module, and the second image communication apparatus 200 may be a terminal having an image communication function.

The first and second image communication apparatuses 100 and 200 may be connected to the image communication server 300 to perform image communication with the image receiving apparatus 400, in operation S210. When the connection is completed, the first and second image communication apparatuses 100 and 200 take photographs of the respective users of the first and second image communication apparatuses 100 and 200, and, thus, acquire the first and second images for image communication, in operation S220.

The second image which is acquired by the second image communication apparatus 200 is transmitted to the first image communication apparatus 100, in operation S230. The first image communication apparatus 100 may synthesize the first and second images to generate and transmit the third image to the image receiving apparatus 400, in operation S250. That is, in the current exemplary embodiment, the operation of generating the third image is performed by the first image communication apparatus 100.

The third image is generated on the basis of the first and second images, and may vary in format. For example, the third image may be generated to simultaneously display the first and second images in an area of a screen, e.g., to display the first and second images on a screen side by side or as upper and lower parts of an image. According to another exemplary embodiment, the third image may be generated to selectively display at least one of the first image and second image according to a predetermined event. For example, if a user of the image receiving apparatus 400 inputs a predetermined key to display either the first image or the second image, the image receiving apparatus 400 transmits such information to the first image communication apparatus, and the first image communication apparatus may generate the third image to display only one image selected by a user based on the received information.

Generation of the third image may be determined according to the connection ID through which the first and second image communication apparatuses 100 and 200 are connected to the image communication server 300, in operation S240. For example, if the first and second image communication apparatuses 100 and 200 are connected to the image communication server 300 through the same ID or a predetermined family ID, they may generate the third image as a group and transmit the third image to the image receiving apparatus 400.

As described above, the first image communication apparatus 100 may be a display apparatus, and may generate and display a fourth image on the display.

If the third image is generated, the first image communication apparatus 100 may encode and transmit to the image communication server 300 the generated third image, in operation S260, or transmit the generated third image directly to the image receiving apparatus 400. If the image communication server 300 receives the third image, it may store the third image therein, in operation S270.

In operation S280, if it is determined that the image receiving apparatus 400 is connected to the image communication server 300, the image communication server 300 transmits the third image to the image receiving apparatus 400, in operation S290. The image receiving apparatus 400 receives the third image, and decodes and outputs the third image, in operation S295. If the image receiving apparatus 400 is not connected to the image communication server 300, the third image, which is stored in the image communication server 300, may be transmitted to the image receiving apparatus 400 when the image receiving apparatus 400 is subsequently connected to the image communication server 300. As the image communication server 300 may determine whether to transmit the image and audio data based on an ID of each device, a user of the image receiving apparatus 400 may identify the third image stored in the storage upon connection to the image communication server 300 through the same ID even in case when a user uses another image receiving apparatus.

The image communication function which is performed according to an exemplary embodiment may include transmission of audio data. The first and second image communication apparatuses 100 and 200 may acquire the first and second audios, respectively. The first image communication apparatus 100 may acquire the second audio from the second image communication apparatus 200 and selectively transmit either the first audio or the second audio. The audio data may be transmitted together with the third image data.

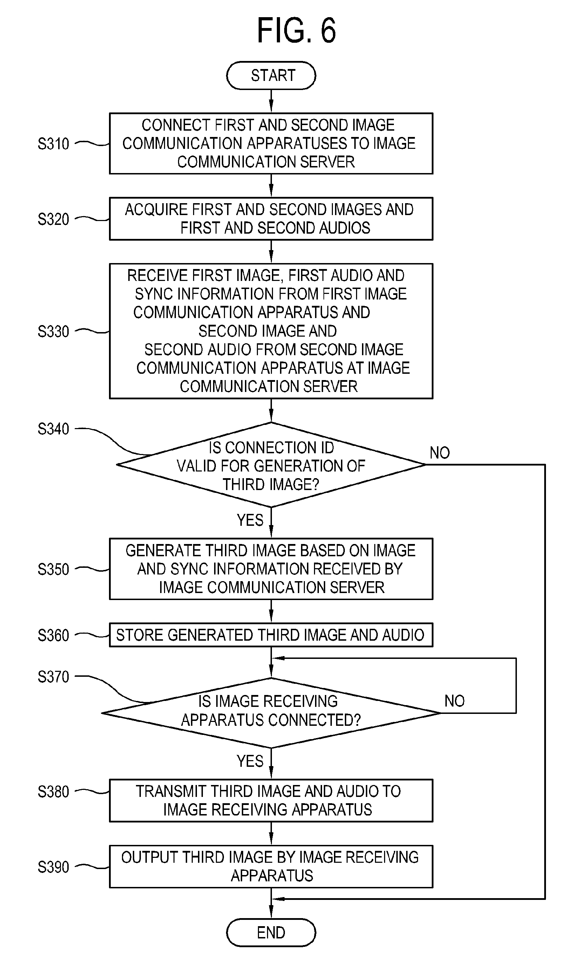

FIG. 6 is a flowchart of the image processing method for image communication according to an exemplary embodiment. The current exemplary embodiment will be described in detail in FIG. 6, and repetitive description will be omitted.

The first and second image communication apparatuses 100 and 200 connect to the image communication server 300, in operation S310. The first and second image communication apparatuses 100 and 200 take photographs of their users and acquire the first image and the second image, respectively, in operation S320.

The image communication server 300 receives the first image and sync information from the first image communication apparatus 100, and receives the second image from the second image communication apparatus 200, in operation S330. In operation S340, it is determined whether connection IDs of the first and second image communication apparatuses 100 and 200 are valid, to generate the third image. The image communication server 300 generates the third image by synthesizing the first and second images based on the received sync information, in operation S350. That is, according to the current exemplary embodiment, the third image, which will be transmitted to the image receiving apparatus 400, is generated by the image communication server 300.

In operation S360, the image communication server 300 stores the generated third image, and transmits the third image to the image receiving apparatus 400, in operation S380. The image receiving apparatus 400 encodes and outputs the received third image, in operation S390.

The current exemplary embodiment may also include transmission of the audio data, which is the same as described as above with reference to FIG. 5.

According to an exemplary embodiment, as the third image is transmitted as an image stream, the image receiving apparatus 400 which receives the third image may decode and display the third image without additional hardware and/or software for synthesizing the first and second images. This is advantageous in data transmission compared to receiving the separate first and second images.

As described above, according to an exemplary embodiment, a system which allows image communication among a plurality of users through image communication apparatuses which have a limited photographing area characteristic of a larger display apparatus is provided.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. An image communication apparatus which performs image communication with an image receiving apparatus, the image communication apparatus comprising:
an image acquirer which acquires a first image of an object;
a communication unit which receives a second image photographed by a slave apparatus which is communicable linked to the communication unit;
a transmission image generator which generates a third image; and
a controller which controls the transmission image generator to generate the third image by synthesizing the first and second images, encodes the third image and controls the communication unit to transmit the third image.

2. The image communication apparatus according to claim 1, wherein the transmission image generator generates the third image to display the first image and the second image in an area of a single screen.

3. The image communication apparatus according to claim 1, wherein the transmission image generator generates the third image to selectively display at least one of the first image and second image according to a predetermined event.

4. The image communication apparatus according to claim 1, further comprising:
a display which displays an image; and
an output image generator which generates a fourth image to be displayed by the display.

5. The image communication apparatus according to claim 1, wherein the controller detects an external device which is communicable with the image communication apparatus, and
receives the second image from the detected external device if the external device has an image communication function.

6. The image communication apparatus according to claim 1, further comprising an audio acquirer which acquires a first audio,
wherein the communication unit receives a second audio from the slave apparatus, and the controller selectively transmits one of the first audio and the second audio, according to a user's selection.

7. An image processing method for image communication, the method comprising:
acquiring a first image from a first image communication apparatus;
acquiring a second image from a second image communication apparatus;
generating a third image to be transmitted to an image receiving apparatus to which a transmission of an image has been requested by the first image communication apparatus, by synthesizing the first and second images; and
encoding and transmitting the third image to the image receiving apparatus.

8. The method according to claim 7, further comprising receiving the second image from the second image communication apparatus,
wherein the generating the third image comprises generating the third image by the first image communication apparatus.

9. The method according to claim 7, further comprising:
transmitting the first image and sync information from the first image communication apparatus, to an image communication server; and
transmitting the second image from the second image communication apparatus, to the image communication server,
wherein the generating the third image comprises generating the third image by the image communication server based on the sync information.

10. The method according to claim 7, wherein the generating the third image comprises generating the third image to display the first and second images in an area of a single screen.

11. The method according to claim 7, wherein the generating the third image comprises generating the third image to selectively display at least one of the first image and second image according to a predetermined event.

12. The method according to claim 7, wherein the first image communication apparatus comprises a display, and the method further comprises:
generating a fourth image; and
displaying the fourth image on the display.

13. The method according to claim 7, further comprising:
acquiring a first audio from the first image communication apparatus;
acquiring a second audio from the second image communication apparatus; and
selectively transmitting one of the first audio and the second audio to the image receiving apparatus according to a selection provided by the first image communication apparatus.

14. The method according to claim 7, further comprising determining whether to generate the third image according to a connection identifier (ID) of the first and second image communication apparatuses.

15. The method according to claim 7, further comprising storing the third image in the image communication server.
